# EUROPEAN PATENT SPECIFICATION

(11) **EP 2 804 066 B1**
(45) Date of publication and mention of the grant of the patent: **28.08.2019**
(21) Application number: 13382183.5
(22) Date of filing: 17.05.2013
(51) Int. Cl.: B64C 19/00, G08G 5/00, G05D 1/10

(54) **Method and system for aircraft guidance**
Verfahren und System zur Flugzeugführung
Procédé et système de guidage d'aéronef

(43) Date of publication of application: 19.11.2014
(73) Proprietor: The Boeing Company, Chicago, IL 60606-1596 (US)
(72) Inventor: Garrido-Lopez, David, 28760 Tres Cantos (ES); De Prins, Johan L., 3001 Heverlee (BE)
(74) Representative: Boult Wade Tennant LLP

(56) References cited:
- US-A- 5 121 325
- US-A1- 2009 088 972
- US-A1- 2010 152 930
- US-A1- 2012 053 760

## Description

### Field of the Invention

This invention relates to a method and system for aircraft guidance, and in particular to an improved Required Time of Arrival (RTA) aircraft guidance strategy.

### Background of the Invention

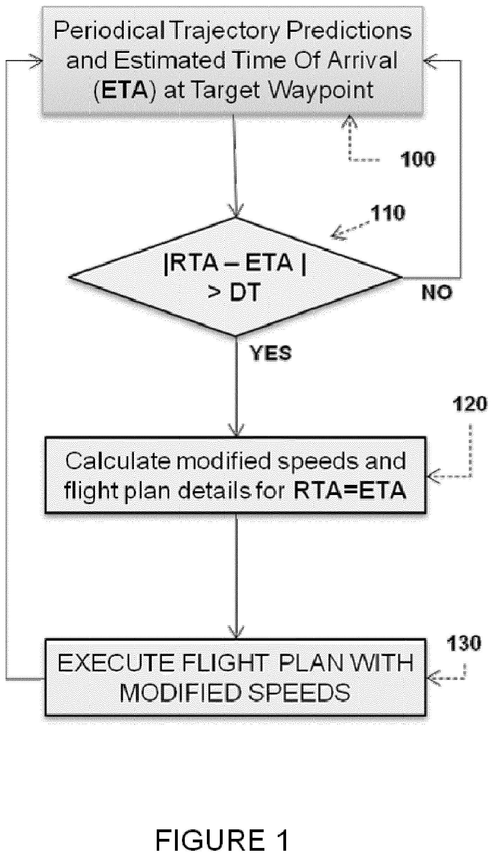

Required Time of Arrival (RTA) guidance is a widely available technology employed in commercial aircraft. Figure 1 illustrates schematically the feedback loop that is used to control the aircraft speed during cruise and descent.

Guidance of the aircraft involves specification of a Required time of Arrival at a target waypoint of the flight plan (step 100 of Figure 1). The aircraft flight management system then periodically predicts an Estimated Time of Arrival (ETA) at the specified target waypoint, based upon various measured and predicted variables such as current wind speed/groundspeed, weather forecast etc., (also step 100 of Figure 1).

At step 110 of Figure 1, a deviation between the RTA and the ETA is determined and, if it is below a chosen threshold DT, then no action is taken. If however the deviation between RTA and ETA exceeds the chosen threshold DT, then at step 120, the aircraft guidance modifies the cruise/descent speeds in order to meet the RTA. At step 130, the flight plan with the modified speeds is executed. Such modifications of flight plan speeds take place several times during cruise and descent before arrival at the target waypoint.

The threshold DT is variable in the sense that it is intentionally larger, the further away from the waypoint the aircraft is. For example, the threshold time difference between RTA and ETA (below which no adjustments are mandated) may be 1 minute when the aircraft is 200 nautical miles (NM) from the waypoint. This is because the degree of uncertainty in the ETA increases with distance from the waypoint. It is an inefficient use of the engines to continually adjust flight speed to try to narrow the 'dead band' of 1 minute. As the aircraft approaches the target waypoint, it becomes more important to track the RTA more closely, and equally the degree of predictability increases. Thus the value of DT can be reduced. For example, DT may be 5 seconds when the aircraft is 10NM from the waypoint. See, for example, US-A-5,121,325, Figure 9.

Some further examples of prior art RTA guidance techniques in accordance with the general scheme of Figure 1 are set out in US-B-6,507,782 and "Airborne Required Time of Arrival control and Integration with ATM", AIAA Aviation Technology Integration and Operations Conference (ATIO_, 2007 (Paper AIAA 2007 - 7835), by Jackson et al. The latter paper suggest the use of a plurality of waypoints en route to the destination airport, with the RTA and ETA being determined and their difference compared with a threshold, for each intermediate waypoint.

The problem with such prior art strategies is that they all result in unpredictabilities during the flight. Unpredictable flights are probe to tactical interventions to correct aircraft positions when they are not in accordance with an agreed trajectory. Such tactical interventions reduce the efficiency of the flight.

US 2012/053760 relates to methods and apparatus for controlling the flight path of an aircraft to follow as closely as possible a predetermined four-dimensional flight path.

US 2009/088972 relates to systems and methods for providing vehicle-centric collision avoidance.

### Summary of the Invention

Against this background, the present invention provides for an improved aircraft guidance method and system.

According to the present invention, a method for guiding an aircraft is defined in claim 1. A system therefore is defined in claim 5. A computer program is set out in claim 7.

Prior art guidance methods are based upon the premise that only the final arrival time (or, in the Jackson paper identified above), only a discrete set of arrival times at a set of intermediate waypoints), is important. The present invention, by contrast, chooses instead the novel approach of following an initial predicted 4D trajectory. A 4D trajectory is an aircraft trajectory predicted accurately as a function of time. In other words, in accordance with the present invention, instead of controlling aircraft speed with the aim of exclusively arriving on time at one, or a discrete number of waypoints, the aircraft speed is also controlled with the aim of following the 4D trajectory throughout the flight.

Following a 4D trajectory rather than simply aiming to arrive at a waypoint at a give time provides several advantages. Firstly, as explained in the background section, large errors between the RTA and the ETA in prior art guidance methods are both tolerated and indeed inevitable, during those parts of the flight distant from the waypoint, not least because of the magnitude of uncertainties there. Following the 4D trajectory, by contrast, results in a significant reduction in the difference between the RTA and the actual time of arrival at the waypoint.

As a consequence of meeting an agreed 4D trajectory between ground and air, the aircraft has greater chances of completing the flight without tactical interventions from ground control. This fact implies several advantages: fewer chances that the flight will be diverted by ground control from its optional lateral path (vectoring) or put in a holding pattern, and fewer chances that ground control mandates an aircraft speed change. This in turn results in fuel and time savings (fewer delays) with consequential operational and cost benefits.

Embodiments of the present invention employ the novel guidance system explained above in a manner complementary to the state of the art RTA based guidance methods. In other words, in preference, the original RTA speed commands are maintained (based upon control of | RTA - ETA | below DT) but, additionally, control of the speed and flight plan is carried out in complementary fashion to track a given 4D trajectory with accuracy. Thus the method allows a trajectory to be shared between the ground and the aircraft, and gives the capability for the aircraft to follow that trajectory with accuracy. A further advantage of the method set out herein is that it requires only minimal modification to the aircraft Flight Management System. A small algorithm added to the existing RTA software is sufficient. In particular no hardware, flight deck, displays or auto throttle modifications are necessary. This contrasts markedly with the modifications needed to implement the multiple RTA technique of the aforementioned Jackson paper, which requires major modifications both to the human interface and to the RTA software, to allow the pilot to enter multiple RTA at multiple waypoints.

Finally it will be observed that current Air Traffic Management systems are evolving from Surveillance based Management (control based upon knowing where aircraft are) into Trajectory based Management (control based upon knowing where the aircraft will be). 4D trajectory/navigation forms a part of the proposals in the 'Concept of Operations for the Next Generation Air Transportation System, Version 2.0, June 2007, as defined by the Joint Planning and Development Office. The method of the present invention is thus aligned with the future Trajectory based Air Traffic Management procedures.

### Brief Description of the Drawings

The invention may be put into practice in a number of ways, one of which will now be described with reference to the drawings in which:
Figure 1 shows a flow chart of a prior art aircraft guidance method;
Figure 2 shows a flow chart of an aircraft guidance method embodying the present invention and including an aircraft speed controller;
Figure 3 shows a schematic diagram of the aircraft speed controller of Figure 2;
Figure 4 shows a graph of the time deviation from a Required time of Arrival at a waypoint, as a function of distance from that waypoint, for the methods of Figures 1 and 2 respectively; and
Figure 5 shows simulated flight paths for aircraft arriving at a waypoint proximal to Palma de Majorca airport in Spain.

### Detailed Description of a Preferred Embodiment

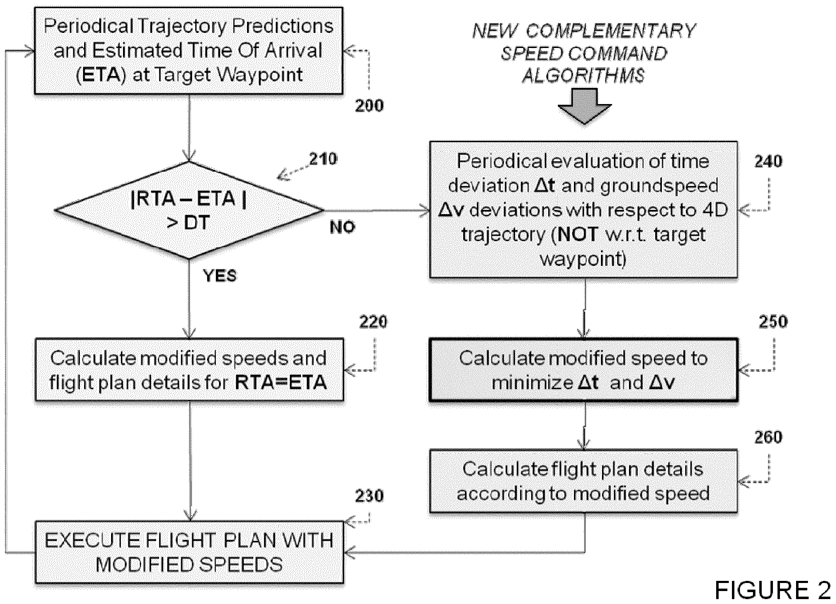

Figure 2 shows a simplified flow chart of an aircraft guidance method embodying the present invention. The flowchart may be logically divided into two parts: a first part (to the left side of Figure 2) that acts to reduce excessive differences between an ETA and an predefined RTA for a chosen waypoint, and a complementary second part, to the right of Figure 2, which comprises a flow of calculations that seek to maintain the aircraft upon a selected 4D flight trajectory - that is, the plot of aircraft position, speed and direction as a function of time.

The second part of the flowchart, that is, the control loop to the right of Figure 2 is enabled periodically, preferably when no speed adjustment is specified by the first part of the flowchart. Specifically, it is desirable that any decisions to adjust the speed of the aircraft as a result of discrepancies between the selected flight path and the measured flight trajectory are complementary to any decisions to adjust the aircraft speed as a result of RTA-ETA exceeding DT. Thus the calculations in the first part of the flowchart do not substitute or compete against the second part of the flowchart.

The process starts at step 200. Here, the RTA at a predetermined waypoint is identified or selected. An initial 4D flight trajectory to the waypoint is also selected. This initial 4D trajectory may be predicted by the aircraft flight management system, or may be predicted elsewhere and provided to the aircraft. At step 210, a difference between the RTA and a current ETA (based upon estimated and measured parameters, as with the prior art) is determined. If the difference exceeds a threshold DT, then at step 220 new predictions are computed by modifying the planned speeds, with the aim of reducing the difference between RTA and ETA. Once the new predictions have been calculated, at step 230 the updated flight plan with the new speeds is executed by sending a throttle adjustment signal so as to adjust the aircraft speed. As with prior art guidance methods, the parameter DT may be chosen so as to be larger further away from the waypoint. However, as will be explained below, by including the 4D flight trajectory control in accordance with preferred embodiments of the invention, deviations from RTA tend to be smaller than in prior art methods, particularly as the waypoint is approached.

Referring still to Figure 2, at step 210, if the difference between the RTA and the ETA is below the threshold DT, so that no speed adjustment would otherwise be mandated, the flowchart moves to step 240.

Here, deviations of time and groundspeed with respect to the initially predicted 4D trajectory are calculated. It is important to note that these deviations are NOT deviations of prediction of time of arrival at the target waypoint. These are instead deviations of current time and groundspeed with respect to the predicted 4D trajectory. For instance, the aircraft reaches a waypoint X. At that position, the aircraft was supposed to arrive at 12:05:10 Z and with a groundspeed (speed with respect to the ground) of 450 knots. However, the aircraft in fact reaches the waypoint at 12:05:14 Z and with 445 knots of speed. That means that the aircraft is late by 4 seconds (Δt = 4 seconds) and slower than predicted by 5 knots (Δvg = -5 knots.

At step 250 of Figure 2, a new speed command is generated in order to minimize the 4D navigation deviations. The algorithms to compute the new speed command are as follows: if the aircraft is late, a speed increment proportional to time deviation is added to current speed. If the aircraft arrives early, by contrast, a speed decrease proportional to time deviation is taken off the current speed. Also if the aircraft flies slower with respect to the predicted trajectory and with respect to the ground, a speed increment proportional to groundspeed deviation is added to current speed. Likewise if the aircraft flies faster with respect to the predicted trajectory and with respect to the ground, a speed reduction proportional to groundspeed deviation is taken from current speed.

These simple speed command algorithms have been tested before as part of another developed 4D guidance technology with exceptional results. Garrido-Lopez, D. and Gomez Ledesma, R., *Four Dimensional Guidance of an Aircraft*, U.S. Patent Application No. 20100282916 (April 2010) and Garrido-López, D., D'Alto, L., and Gomez Ledesma, R., A Novel Four-Dimensional Guidance For Continuous Descent Approaches, Proceedings of the 28th Digital Avionics Systems Conference, Orlando (Florida), Paper 6.E.1, 2009, pp. 1-11, doi: http://dx.doi.org/10.1109/DASC.2009.5347433.

At step 260, the predictions of the planned flight are modified so that they are consistent with the new speed command. The new estimated time of arrival at the target waypoint may in general differ from the Required Time of Arrival. However, this ETA should in general disagree with the RTA by a small magnitude compared to the threshold DT. This is particularly the case when the aircraft is far from the target waypoint, since the threshold DT, as explained above, is set very large in order to avoid too frequent RTA speed commands. The benefit of the new speed commands is particularly significant when the aircraft is far from the target waypoint: these new commands enable the aircraft to follow the 4D trajectory with accuracy precisely when the original RTA speed commands are less effective.

Finally at step 230, the flight plan with the new speed is executed and the new speed is immediately commanded.

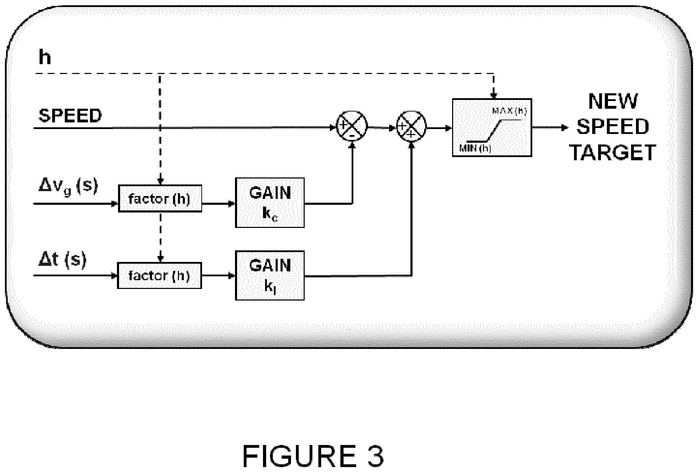

Figure 3 shows a more detailed schematic of the control box that calculates the speed commands based on time and groundspeed deviations with respect to the 4D trajectory. The algorithms are as explained above in connection with Figure 2, and have proven to be stable, robust, and effective in the literature.

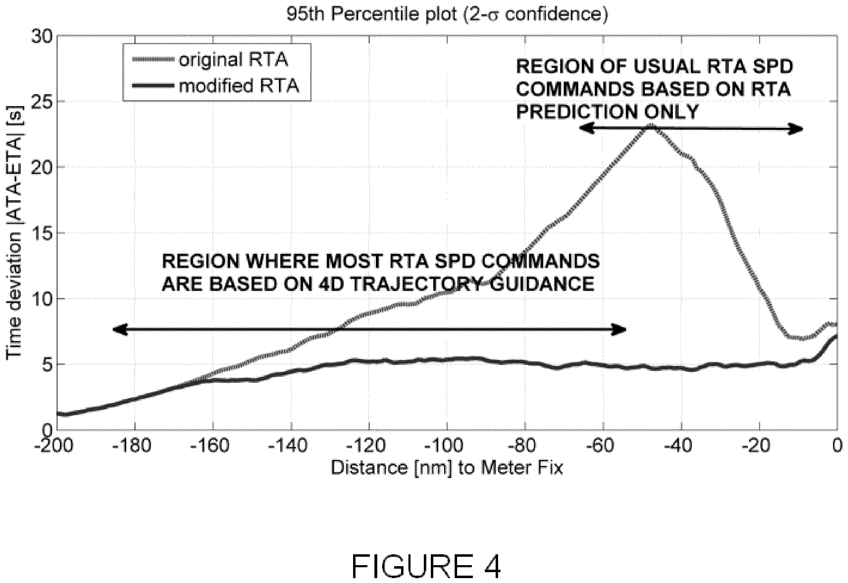

Figure 4 shows statistical results of fast-time aircraft arrival simulations with the prior art RTA technology and the modified RTA technology embodying the present invention. The plot shows the percentile 95 of time error distribution as a function of distance to the metering fix (RTA target waypoint) for all the simulated aircraft. Two days of real southbound arrivals toward Palma de Mallorca International Airport (Spain) were used (over 230 flights of different aircraft types). Real and predicted winds and temperature were taken from Global Forecast System (GFS) for the same days. The metering fix is MUROS. Required times of Arrival were imposed by a traffic sequencer in MUROS, which thus becomes the RTA target waypoint. The traffic simulation tool takes accurate aircraft performance models, and assimilates weather and temperature conditions from different sources (GFS most notably). The tool also computes accurate flight plan and trajectory prediction for every aircraft, and simulates Auto-Flight and Auto-Throttle systems, pilot speed brake actuations, vertical navigation, lateral navigation, and RTA guidance (previously existing and new).

The simulations show that:
- Under existing RTA guidance, the time deviations with respect to established 4D trajectories are confined to within 25 seconds for 95% of the flights. This is because the existing RTA method avoids changes of aircraft speed far away from the metering fix.
- Time deviation using the novel RTA guidance is greatly improved far from the metering fix, and kept under 6 seconds. This is because the new complementary 4D-navigation based speed commands guide the aircraft more accurately following the 4D trajectory.
- About 50 or 60 NM before the metering fix, original RTA speed commands take place and reduce time deviations. For the method embodying the present invention, however, fewer speed commands are required, since flights reach this mid-range distance under good agreement with 4D trajectory, and therefore, fewer speed corrections are required.
- In the last stretch of 10 NM to 20NM, aircraft speeds are no longer modified, since there are additional operational constraints, and also because RTA methods avoid speed changes too close to the metering fix (otherwise very large speed changes may occur). Therefore, time deviations grow up to 8 seconds for the prior art RTA method. An improvement is observed in the results using the method of the invention (7 seconds of final error for 95% of aircraft).

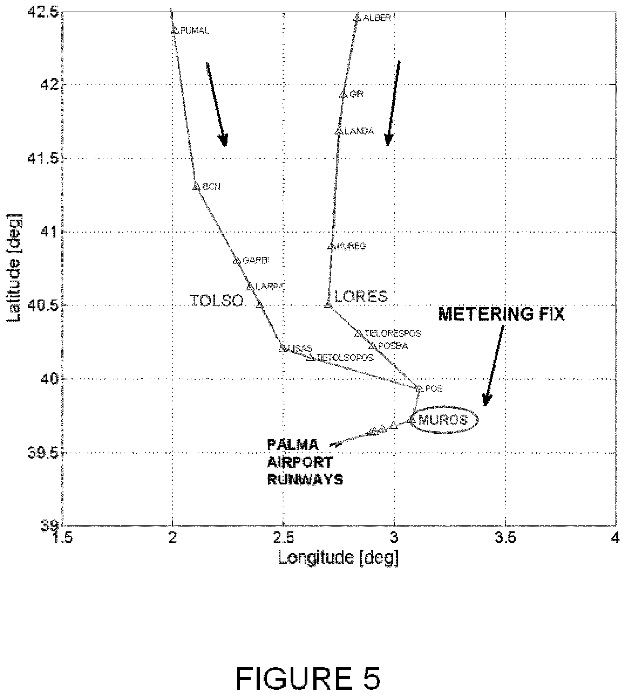

Figure 5 shows the lateral tracks of the simulated arrivals at Palma de Majorca airport in Spain.

Although a specific example of a preferred embodiment has been described, the skilled reader will recognize that various modifications are contemplated.

## Claims

1. A method of guiding an aircraft comprising the steps of:
(a) selecting an initial predicted flight trajectory as a function of time;
(b) identifying an initial Required Time of Arrival (RTA) at a selected waypoint;
(c) determining, during flight, an Estimated Time of Arrival (ETA) based upon one or more measured or predicted parameters; and
(d) calculating a difference between RTA and ETA;
(e) determining whether |RTA-ETA| is greater or less than a threshold time DT;
the method further comprising, when it is determined that |RTA-ETA| <DT, the steps of:
(f)(i) determining during flight, a deviation between the initial predicted flight trajectory and a measured current trajectory;
(f)(ii) generating a revised speed command in order to minimize the determined deviation;
(f)(iii) computing modifications to the planned flight speeds, based upon the generated revised speed command;
(g) executing the revised speed command so that the aircraft seeks to reduce time and groundspeed deviations with respect to the initial predicted flight trajectory;
the method also comprising, when it is determined that |RTA-ETA| > DT, the steps of
(f) generating a further revised speed command in order to reduce the difference between RTA and ETA; and
(g) executing the further revised speed command so that the aircraft seeks to reduce the difference between RTA and ETA.

2. The method of claim 1, further comprising subsequent to the completion of step (g) of executing the revised speed command, the steps of
(h) repeating the steps (f)(i), (f)(ii), (f) (iii) and (g) so as to generate a further revised speed commands for causing the aircraft to seek to follow the initial predicted flight trajectory.

3. The method of claim 1 or claim 2 wherein the step (f)(i) of determining the deviation comprises determining:
(i) the time difference between a predicted time of arrival at a location within the initial predicted flight trajectory, and a measured time of arrival at that point, and
(ii) the speed difference between a predicted speed at that location within the initial predicted flight trajectory, and a measured speed at that location within the initial predicted flight trajectory.

4. The method of claim 3, wherein a speed change defined by the revised speed command is proportional to the magnitude of the time and/or speed differences.

5. A system for guiding an aircraft comprising:
(a) means for identifying an initial Required Time of Arrival (RTA) at a selected waypoint
(b) means for selecting an initial predicted flight trajectory as a function of time;
(c) means for determining, during flight, an Estimated Time of Arrival (ETA) based upon one or more measured or predicted parameters;
(d) means for calculating a difference between RTA and ETA;
(e) means for determining whether |RTA-ETA| is greater than or less than a threshold time DT;
the system further comprising:
(f) means for determining during flight, a deviation between the initial predicted flight trajectory and a measured current trajectory, the deviation being determined when |RTA-ETA|<DT;
(g) means for generating a revised speed command in order to minimize the determined deviation, the revised speed command being generated when |RTA-ETA|<DT;
(h) means for computing modifications to the planned flight speeds, based upon the generated revised speed command;
the system also comprising:
(i) means for generating a further revised speed command in order to reduce the difference between RTA and ETA, the further revised speed command being generated when |RTA-ETA|>DT;
and
(j) means for executing the revised speed command when |RTA-ETA|<DT, and the further revised speed command when |RTA-ETA|>DT, so that, when |RTA-ETA|<DT, the aircraft seeks to reduce time and groundspeed deviations with respect to the initial predicted flight trajectory and, when |RTA-ETA|>DT, the aircraft seeks to reduce the difference between RTA and ETA.

6. The system of claim 5, wherein the means for determining the deviation comprises means for determining:
(i) the time difference between a predicted time of arrival at a location within the initial predicted flight trajectory, and a measured time of arrival at that point, and
(ii) the speed difference between a predicted speed at that location within the initial predicted flight trajectory, and a measured speed at that location within the initial predicted flight trajectory.

7. A computer program comprising program code which, when executed, carries out the method steps of any of claims 1 to 4.

## Patentansprüche

1. Verfahren zum Führen eines Flugzeugs, umfassend die Schritte:
(a) Auswählen einer ursprünglich vorhergesagten Flugtrajektorie als Funktion der Zeit;
(b) Identifizieren einer ursprünglichen erforderlichen Ankunftszeit (Required Time of Arrival, RTA) an einem ausgewählten Wegpunkt;
(c) Ermitteln, während des Fluges, einer geschätzten Ankunftszeit (Estimated Time of Arrival, ETA) basierend auf einem oder mehreren gemessenen oder vorhergesagten Parametern ; und
(d) Berechnen einer Differenz zwischen RTA und ETA;
(e) Ermitteln, ob |RTA-ETA| größer oder kleiner als eine Schwellenzeit DT ist;
wobei das Verfahren ferner, wenn bestimmt wird, dass |RTA-ETA| < DT, die folgenden Schritte umfasst:
(f)(i) Ermitteln, während des Fluges, einer Abweichung zwischen der ursprünglich vorhergesagten Flugtrajektorie und einer gemessenen aktuellen Trajektorie;
(f)(ii) Erzeugen eines revidierten Geschwindigkeitsbefehls, um die ermittelte Abweichung zu minimieren;
(f)(iii) Berechnen von Änderungen der geplanten Fluggeschwindigkeiten, basierend auf dem erzeugten revidierten Geschwindigkeitsbefehl;
g) Ausführen des revidierten Geschwindigkeitsbefehls, so dass das Flugzeug versucht, Zeit- und Bodengeschwindigkeitsabweichungen in Bezug auf die ursprüngliche vorhergesagte Flugtrajektorie zu verringern;
wobei das Verfahren ferner, wenn ermittelt wird, dass |RTA-ETA| > DT, die folgenden Schritte umfasst
(f) Erzeugen eines weiteren revidierten Geschwindigkeitsbefehls, um die Differenz zwischen RTA und ETA zu verringern; und
g) Ausführen des weiteren revidierten Geschwindigkeitsbefehls, so dass das Flugzeug versucht, die Differenz zwischen RTA und ETA zu verringern.

2. Verfahren nach Anspruch 1, ferner mit, nach Abschluss des Schrittes (g) des Ausführens des revidierten Geschwindigkeitsbefehls, den Schritten:
(h) Wiederholen der Schritte (f)(i), (f)(ii), (f)(iii) und (g), um weitere revidierte Geschwindigkeitsbefehle zu erzeugen, die bewirken, dass das Flugzeug versucht, der ursprünglich vorhergesagten Flugtrajektorie zu folgen.

3. Verfahren nach Anspruch 1 oder Anspruch 2, bei dem der Schritt (f)(i) des Ermittelns der Abweichung umfasst:
(i) Ermitteln der Zeitdifferenz zwischen einer vorhergesagten Ankunftszeit an einem Ort innerhalb der ursprünglich vorhergesagten Flugtrajektorie und einer gemessenen Ankunftszeit an diesem Punkt, und
(ii) Ermitteln der Geschwindigkeitsdifferenz zwischen einer vorhergesagten Geschwindigkeit an diesem Ort innerhalb der ursprünglich vorhergesagten Flugtrajektorie und einer gemessenen Geschwindigkeit an diesem Ort innerhalb der ursprünglich vorhergesagten Flugtrajektorie.

4. Verfahren nach Anspruch 3, bei dem eine durch den revidierten Geschwindigkeitsbefehl definierte Geschwindigkeitsänderung proportional zur Größe der Zeit- und/oder Geschwindigkeitsdifferenzen ist.

5. System zum Führen eines Flugzeugs, umfassend:
(a) Mittel zum Identifizieren einer ursprünglich erforderlichen Ankunftszeit (Required Time of Arrival, RTA) an einem ausgewählten Wegpunkt;
(b) Mittel zum Auswählen einer ursprünglich vorhergesagten Flugtrajektorie als Funktion der Zeit;
(c) Mittel zum Ermitteln, während des Fluges, einer geschätzten Ankunftszeit (Estimated Time of Arrival, ETA), basierend auf einem oder mehreren gemessenen oder vorhergesagten Parametern;
(d) Mittel zum Berechnen einer Differenz zwischen RTA und ETA;
(e) Mittel zum Ermitteln, ob |RTA-ETA| größer oder kleiner als eine Schwellenzeit DT ist;
wobei das System ferner umfasst:
(f) Mittel zum Ermitteln, während des Fluges, einer Abweichung zwischen der ursprünglich vorhergesagten Flugtrajektorie und einer gemessenen aktuellen Trajektorie, wobei die Abweichung ermittelt wird, wenn |RTA-ETA| < DT;
(g) Mittel zum Erzeugen eines revidierten Geschwindigkeitsbefehls, um die ermittelte Abweichung zu minimieren, wobei der revidierte Geschwindigkeitsbefehl erzeugt wird, wenn |RTA-ETA| < DT;
(h) Mittel zum Berechnen von Änderungen der geplanten Fluggeschwindigkeiten auf der Grundlage des erzeugten revidierten Geschwindigkeitsbefehls;
wobei das System ferner umfasst:
(i) Mittel zum Erzeugen eines weiteren revidierten Geschwindigkeitsbefehls zum Verringern der Differenz zwischen RTA und ETA, wobei der weitere revidierte Geschwindigkeitsbefehl erzeugt wird, wenn |RTA-ETA| > DT; und
(j) Mittel zum Ausführen des revidierten Geschwindigkeitsbefehls bei |RTA-ETA| < DT und des weiteren revidierten Geschwindigkeitsbefehls bei |RTA-ETA| > DT, so dass im Falle von |RTA-ETA| < DT das Flugzeug versucht, Zeit- und Bodengeschwindigkeitsabweichungen in Bezug auf die ursprüngliche vorhergesagte Flugtrajektorie zu reduzieren, und, im Falle von |RTA-ETA| > DT, das Flugzeug versucht, die Differenz zwischen RTA und ETA zu verringern.

6. System nach Anspruch 5, bei dem das Mittel zum Bestimmen der Abweichung Mittel umfasst zum Ermitteln
(i) der Zeitdifferenz zwischen einer vorhergesagten Ankunftszeit an einem Ort innerhalb der ursprünglich vorhergesagten Flugtrajektorie und einer gemessenen Ankunftszeit an diesem Punkt, und
(ii) der Geschwindigkeitsdifferenz zwischen einer vorhergesagten Geschwindigkeit an diesem Ort innerhalb der ursprünglich vorhergesagten Flugtrajektorie und einer gemessenen Geschwindigkeit an diesem Ort innerhalb der ursprünglich vorhergesagten Flugtrajektorie.

7. Computerprogramm, umfassend einen Programmcode, der, wenn er ausgeführt wird, die Verfahrensschritte eines der Ansprüche 1 bis 4 ausführt.

## Revendications

1. Procédé de guidage d'un aéronef comprenant les étapes ci-dessous consistant à :
(a) sélectionner une trajectoire de vol prévue initiale en fonction du temps ;
(b) identifier une heure d'arrivée requise (RTA) initiale, au niveau d'un point de cheminement sélectionné ;
(c) déterminer, en cours de vol, une heure d'arrivée estimée (ETA) sur la base d'un ou plusieurs paramètres mesurés ou prévus ; et
(d) calculer une différence entre l'heure RTA et l'heure ETA ;
(e) déterminer si la valeur |RTA - ETA| est supérieure ou inférieure à un temps de seuil DT ;
le procédé comprenant en outre, lorsqu'il est déterminé que |RTA - ETA| < DT, les étapes ci-dessous consistant à :
(f)(i) déterminer, en cours de vol, un écart entre la trajectoire de vol prévue initiale et une trajectoire en cours mesurée ;
(f)(ii) générer une instruction de vitesse révisée afin de minimiser l'écart déterminé ;
(f) (iii) calculer des modifications à apporter aux vitesses de vol programmées, sur la base de l'instruction de vitesse révisée générée ;
(g) exécuter l'instruction de vitesse révisée de sorte que l'aéronef cherche à réduire les écarts de temps et de vitesse sol par rapport à la trajectoire de vol prévue initiale ;
le procédé comprenant également, lorsqu'il est déterminé que |RTA - ETA| > DT, les étapes ci-dessous consistant à :
(f) générer une instruction de vitesse révisée supplémentaire afin de réduire la différence entre l'heure RTA et l'heure ETA ; et
(g) exécuter l'instruction de vitesse révisée supplémentaire de sorte que l'aéronef cherche à réduire la différence entre l'heure RTA et l'heure ETA.

2. Procédé selon la revendication 1, comprenant en outre, subséquemment à l'achèvement de l'étape (g) consistant à exécuter l'instruction de vitesse révisée, l'étape ci-dessous consistant à :
(h) répéter les étapes (f)(i), (f)(ii), (f)(iii) et (g) de manière à générer une instruction de vitesse révisée supplémentaire en vue d'amener l'aéronef à chercher à suivre la trajectoire de vol prévue initiale.

3. Procédé selon la revendication 1 ou 2, dans lequel l'étape (f)(i) de détermination de l'écart consiste à déterminer :
(i) la différence de temps entre une heure d'arrivée prévue à un emplacement situé au sein de la trajectoire de vol prévue initiale et une heure d'arrivée mesurée au niveau dudit emplacement ; et
(ii) la différence de vitesse entre une vitesse prévue à cet emplacement au sein de la trajectoire de vol prévue initiale et une vitesse mesurée à cet emplacement au sein de la trajectoire de vol prévue initiale.

4. Procédé selon la revendication 3, dans lequel un changement de vitesse défini par l'instruction de vitesse révisée est proportionnel à l'amplitude des différences de temps et/ou de vitesse.

5. Système destiné à guider un aéronef, comprenant :
(a) un moyen pour identifier une heure d'arrivée requise (RTA) initiale, au niveau d'un point de cheminement sélectionné ;
(b) un moyen pour sélectionner une trajectoire de vol prévue initiale en fonction du temps ;
(c) un moyen pour déterminer, en cours de vol, une heure d'arrivée estimée (ETA) sur la base d'un ou plusieurs paramètres mesurés ou prévus ; et
(d) un moyen pour calculer une différence entre l'heure RTA et l'heure ETA ;
(e) un moyen pour déterminer si la valeur |RTA - ETA| est supérieure ou inférieure à un temps de seuil DT ;
le système comprenant en outre :
(f) un moyen pour déterminer, en cours de vol, un écart entre la trajectoire de vol prévue initiale et une trajectoire en cours mesurée, l'écart étant déterminé lorsque |RTA - ETA| < DT ;
(g) un moyen pour générer une instruction de vitesse révisée afin de minimiser l'écart déterminé, l'instruction de vitesse révisée étant générée lorsque |RTA - ETA| < DT ;
(h) un moyen pour calculer des modifications à apporter aux vitesses de vol programmées, sur la base de l'instruction de vitesse révisée générée ;
le système comprenant en outre :
(i) un moyen pour générer une instruction de vitesse révisée supplémentaire afin de réduire la différence entre l'heure RTA et l'heure ETA, l'instruction de vitesse révisée supplémentaire étant générée lorsque |RTA - ETA| > DT ; et
(j) un moyen pour exécuter l'instruction de vitesse révisée lorsque |RTA - ETA| < DT, et l'instruction de vitesse révisée supplémentaire lorsque |RTA - ETA| > DT, de sorte que, lorsque |RTA - ETA| < DT, l'aéronef cherche à réduire les écarts de temps et de vitesse sol par rapport à la trajectoire de vol prévue initiale, et lorsque |RTA - ETA| > DT, l'aéronef cherche à réduire la différence entre l'heure RTA et l'heure ETA ;

6. Système selon la revendication 5, dans lequel le moyen pour déterminer l'écart comprend un moyen pour déterminer :
(i) la différence de temps entre une heure d'arrivée prévue à un emplacement situé au sein de la trajectoire de vol prévue initiale et une heure d'arrivée mesurée à cet emplacement ; et
(ii) la différence de vitesse entre une vitesse prévue à cet emplacement au sein de la trajectoire de vol prévue initiale et une vitesse mesurée à cet emplacement au sein de la trajectoire de vol prévue initiale.

7. Programme informatique comprenant un code de programme qui, lorsqu'il est exécuté, met en oeuvre les étapes de procédé selon l'une quelconque des revendications 1 à 4.
